# EUROPEAN PATENT APPLICATION

(11) **EP 2 047 940 A1**
(43) Date of publication of application: **15.04.2009**
(21) Application number: 07019669.6
(22) Date of filing: 08.10.2007
(51) Int. Cl.: B23K 26/42, F01D 5/00, B23K 9/00, B23K 9/235, B23K 10/02, B23K 26/32, B23K 101/00

(54) **Preheating temperature during welding**

(71) Applicant: SIEMENS AKTIENGESELLSCHAFT, 80333 München (DE)
(72) Inventor: Mokadem, Selim, Dr., 40472 Düsseldorf (DE)

(57) **Abstract**

Welding repair of single crystal super alloys often leads to two main types of defects: cracks and spurious grains.

Both defects can be avoided using an optimized preheating temperature set to higher than 500°C.

## Description

The invention relates to a method of welding locally the surface of a Ni base, especially a single crystal (SX) superalloy substrate using a laser beam while preheating the substrate to an optimized temperature for the purpose of repairing cracks.

This is useful because blades are expensive, especially for single crystalline components (SX) components.

The US patent US 5,374,319 teaches that the preheating temperature during welding is 760°C, preferably at a higher temperature of 920°C.

After casting or after service high temperature turbine parts (e.g. turbine blades or vanes) may present surface cracks that must be repaired prior processing.

It is therefore the aim of the invention to overcome this problem.
The problem is solved by a method according claim 1.
Further advantageous steps are listed in the dependent claims which can be combined arbitrarily which each other to yield further advantages.

A laser assisted process is foreseen for the repair of cracks affecting SX turbine parts by surface local controlled laser welding or remelting.

When SX components are treated by a laser, two main types of defects might affect the repaired zone: spurious grains and solidification cracking.

The conditions for successful SX repair on SX components require epitaxial and columnar growth and avoiding equiaxed or misoriented columnar growth responsible for grain boundaries formation. To guarantee a SX structure, a precise process control that insures epitaxial columnar growth is essential.

Apart from the microstructure control, conditions which produce crack free solidification constitute a prerequisite for the repair of real parts.

The rising of the temperature of the surrounding material through preheating constitute the most effective way to reduce the cooling rate and the cracking tendency. The preheating treatment generally used for gamma prime precipitation strengthened nickel base superalloys consists in heating the entire weld area to a ductile temperature set above the aging temperature (∼870°C) and below the incipient melting temperature but might be defined as being set in between 950°C and 1000°C US 5,374,319.

Within this temperature range the thermal gradients are reduced by one or to order of magnitude and thus increase the risk for nucleation of spurious grains by increasing the driving force for nucleation. The process window for SX solidification is thus critically reduced which drastically limit the use of the SX laser assisted repair.

Such high preheating temperatures also constitute a risk for the process upscale to real parts as it can trigger recrystallization of location presenting high dislocation density (e.g. blade roots).

The limitation inherent to the use of the preheating treatment defined in the state of the art is solved trough the definition of a preheating treatment balancing those two conflicting features (spurious grain nucleation and hot cracking).

The optimal preheating temperature here proposed is above 500°C. This particular temperature allows reducing the yield strength of the surrounding material and thus the associated restraint which usually restrict the required shrinkage of the weld bead and lead to tensile stress build-up in the critical area while holding the driving force for spurious grain nucleation to a sufficiently low value.

The heating source employed may consist in an induction system allowing local heat treatment.

Taking into account the somewhat low temperature here defined the use of infrared lamp or defocused laser beam might be conceivable to achieve the desired preheating temperature.
Figure 1 shows a gas turbine,
Figure 2 shows a turbine blade,
Figure 3 shows a combustion chamber,
Figure 4, 5, 6 shows a component to be repaired by welding,
Figure 7 shows a listing of superalloys and
Figure 8, 9 experimental results.

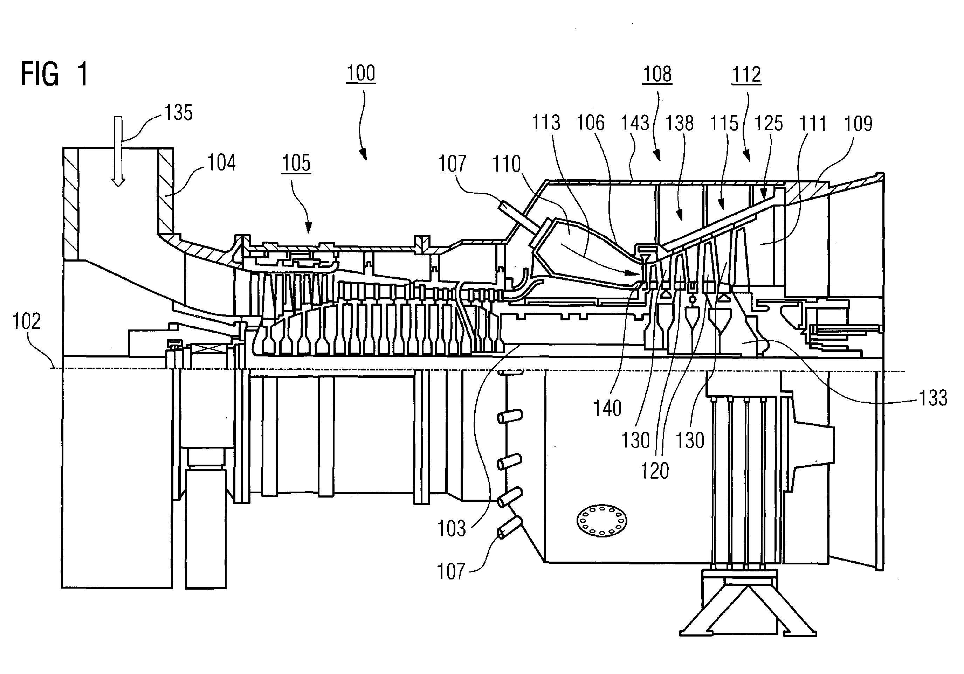

Figure 1 shows, by way of example, a partial longitudinal section through a gas turbine 100.

In the interior, the gas turbine 100 has a rotor 103 which is mounted such that it can rotate about an axis of rotation 102, has a shaft 101 and is also referred to as the turbine rotor.

An intake housing 104, a compressor 105, a, for example, toroidal combustion chamber 110, in particular an annular combustion chamber, with a plurality of coaxially arranged burners 107, a turbine 108 and the exhaust-gas housing 109 follow one another along the rotor 103.

The annular combustion chamber 110 is in communication with a, for example, annular hot-gas passage 111, where, by way of example, four successive turbine stages 112 form the turbine 108.

Each turbine stage 112 is formed, for example, from two blade or vane rings. As seen in the direction of flow of a working medium 113, in the hot-gas passage 111 a row of guide vanes 115 is followed by a row 125 formed from rotor blades 120.

The guide vanes 130 are secured to an inner housing 138 of a stator 143, whereas the rotor blades 120 of a row 125 are fitted to the rotor 103 for example by means of a turbine disk 133.

A generator (not shown) is coupled to the rotor 103.

While the gas turbine 100 is operating, the compressor 105 sucks in air 135 through the intake housing 104 and compresses it. The compressed air provided at the turbine-side end of the compressor 105 is passed to the burners 107, where it is mixed with a fuel. The mix is then burnt in the combustion chamber 110, forming the working medium 113. From there, the working medium 113 flows along the hot-gas passage 111 past the guide vanes 130 and the rotor blades 120. The working medium 113 is expanded at the rotor blades 120, transferring its momentum, so that the rotor blades 120 drive the rotor 103 and the latter in turn drives the generator coupled to it.

While the gas turbine 100 is operating, the components which are exposed to the hot working medium 113 are subject to thermal stresses. The guide vanes 130 and rotor blades 120 of the first turbine stage 112, as seen in the direction of flow of the working medium 113, together with the heat shield bricks which line the annular combustion chamber 110, are subject to the highest thermal stresses.

To be able to withstand the temperatures which prevail there, they can be cooled by means of a coolant.

Substrates of the components may likewise have a directional structure, i.e. they are in single-crystal form (SX structure) or have only longitudinally oriented grains (DS structure).

By way of example, iron-based, nickel-based or cobalt-based superalloys are used as material for the components, in particular for the turbine blade or vane 120, 130 and components of the combustion chamber 110. Superalloys of this type are known, for example, from EP 1 204 776 B1 EP 1 306 454, EP 1 319 729 A1, WO 99/67435 or WO 00/44949.

The guide vane 130 has a guide vane root (not shown here) facing the inner housing 138 of the turbine 108 and a guide vane head at the opposite end from the guide vane root. The guide vane head faces the rotor 103 and is fixed to a securing ring 140 of the stator 143.

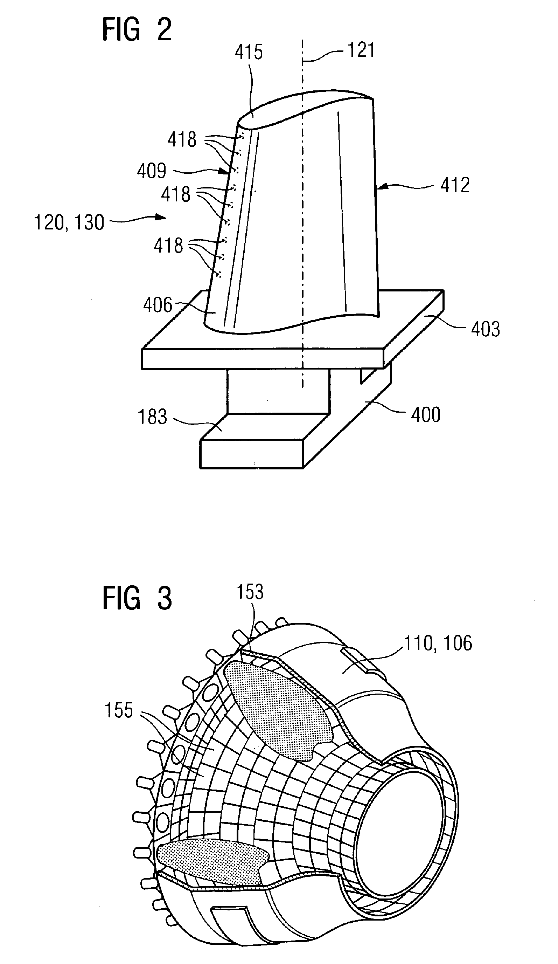

Figure 2 shows a perspective view of a rotor blade 120 or guide vane 130 of a turbomachine, which extends along a longitudinal axis 121.

The turbomachine may be a gas turbine of an aircraft or of a power plant for generating electricity, a steam turbine or a compressor.

The blade or vane 120, 130 has, in succession along the longitudinal axis 121, a securing region 400, an adjoining blade or vane platform 403 and a main blade or vane part 406 as well as a blade or vane tip 415.
As a guide vane 130, the vane 130 may have a further platform (not shown) at its vane tip 415.

A blade or vane root 183, which is used to secure the rotor blades 120, 130 to a shaft or disk (not shown), is formed in the securing region 400.

The blade or vane root 183 is designed, for example, in hammerhead form. Other configurations, such as a fir-tree or dovetail root, are possible.

The blade or vane 120, 130 has a leading edge 409 and a trailing edge 412 for a medium which flows past the main blade or vane part 406.

In the case of conventional blades or vanes 120, 130, by way of example solid metallic materials, in particular superalloys, are used in all regions 400, 403, 406 of the blade or vane 120, 130.

Superalloys of this type are known, for example, from EP 1 204 776 B1, EP 1 306 454, EP 1 319 729 A1, WO 99/67435 or WO 00/44949.
The blade or vane 120, 130 may in this case be produced by a casting process, also by means of directional solidification, by a forging process, by a milling process or combinations thereof.

Workpieces with a single-crystal structure or structures are used as components for machines which, in operation, are exposed to high mechanical, thermal and/or chemical stresses. Single-crystal workpieces of this type are produced, for example, by directional solidification from the melt. This involves casting processes in which the liquid metallic alloy solidifies to form the single-crystal structure, i.e. the single-crystal workpiece, or solidifies directionally.

In this case, dendritic crystals are oriented along the direction of heat flow and form either a columnar crystalline grain structure (i.e. grains which run over the entire length of the workpiece and are referred to here, in accordance with the language customarily used, as directionally solidified) or a single-crystal structure, i.e. the entire workpiece consists of one single crystal. In these processes, a transition to globular (polycrystalline) solidification needs to be avoided, since non-directional growth inevitably forms transverse and longitudinal grain boundaries, which negate the favorable properties of the directionally solidified or single-crystal component.

Where the text refers in general terms to directionally solidified microstructures, this is to be understood as meaning both single crystals, which do not have any grain boundaries or at most have small-angle grain boundaries, and columnar crystal structures, which do have grain boundaries running in the longitudinal direction but do not have any transverse grain boundaries. This second form of crystalline structures is also described as directionally solidified microstructures (directionally solidified structures). Processes of this type are known from US A 6,024,792 and EP 0 892 090 A1.

The blades or vanes 120, 130 may likewise have coatings protecting against corrosion or oxidation, e.g. MCrA1X (M is at least one element selected from the group consisting of iron (Fe), cobalt (Co), nickel (Ni), X is an active element and represents yttrium (Y) and/or silicon and/or at least one rare earth element, or hafnium (Hf)). Alloys of this type are known from EP 0 486 489 B1, EP 0 786 017 B1, EP 0 412 397 B1 or EP 1 306 454 A1.
The density is preferably 95% of the theoretical density.
A protective aluminum oxide layer (TGO = thermally grown oxide layer) forms on the MCrAlX layer (as an intermediate layer or an outermost layer).

It is also possible for a thermal barrier coating, consisting for example of ZrO₂, Y₂O₃-ZrO₂, i.e. unstabilized, partially stabilized or fully stabilized by yttrium oxide and/or calcium oxide and/or magnesium oxide, which is preferably the outermost layer, to be present on the MCrAlX.
The thermal barrier coating covers the entire MCrAIX layer. Columnar grains are produced in the thermal barrier coating by means of suitable coating processes, such as for example electron beam physical vapor deposition (EB-PVD).
Other coating processes are conceivable, for example atmospheric plasma spraying (APS), LPPS, VPS or CVD. The thermal barrier coating may include porous grains which have microcracks or macrocracks for improving its resistance to thermal shocks. The thermal barrier coating is therefore preferably more porous than the McrAIX layer.

The blade or vane 120, 130 may be hollow or solid in form. If the blade or vane 120, 130 is to be cooled, it is hollow and may also have film-cooling holes 418 (indicated by dashed lines).

Figure 3 shows a combustion chamber 110 of the gas turbine 100. The combustion chamber 110 is configured, for example, as what is known as an annular combustion chamber, in which a multiplicity of burners 107 arranged circumferentially around an axis of rotation 102 open out into a common combustion chamber space 154 and generate flames 156. For this purpose, the combustion chamber 110 overall is of annular configuration positioned around the axis of rotation 102.

To achieve a relatively high efficiency, the combustion chamber 110 is designed for a relatively high temperature of the working medium M of approximately 1000°C to 1600°C. To allow a relatively long service life even with these operating parameters, which are unfavorable for the materials, the combustion chamber wall 153 is provided, on its side which faces the working medium M, with an inner lining formed from heat shield elements 155.

A cooling system may also be provided for the heat shield elements 155 and/or their holding elements, on account of the high temperatures in the interior of the combustion chamber 110. The heat shield elements 155 are then, for example, hollow and if appropriate also have cooling holes (not shown) opening out into the combustion chamber space 154.

Each heat shield element 155, made from an alloy is provided on the working medium side with a particularly heat-resistant protective layer (MCrAIX layer and/or ceramic coating) or is made from high-temperature-resistant material (solid ceramic bricks).

These protective layers may be similar to those used for the turbine blades or vanes, i.e. for example meaning MCrAIX: M is at least one element selected from the group consisting of iron (Fe), cobalt (Co), nickel (Ni), X is an active element and represents yttrium (Y) and/or silicon and/or at least one rare earth element, or hafnium (Hf). Alloys of this type are known from EP 0 486 489 B1, EP 0 786 017 B1, EP 0 412 397 B1 or EP 1 306 454 A1.

It is also possible for a, for example, ceramic thermal barrier coating, consisting for example of ZrO₂ Y₂O₃-ZrO₂, i.e. unstabilized, partially stabilized or fully stabilized by yttrium oxide and/or calcium oxide and/or magnesium oxide, to be present on the MCrAIX.

Columnar grains are produced in the thermal barrier coating by means of suitable coating processes, such as for example electron beam physical vapor deposition (EB-PVD).

Other coating processes are conceivable, for example atmospheric plasma spraying (APS), LPPS, VPS or CVD. The thermal barrier coating may have porous grains which have microcracks or macrocracks to improve its resistance to thermal shocks.

Refurbishment means that after they have been used, protective layers may have to be removed from turbine blades or vanes 120, 130, heat shield elements 155 (e.g. by sandblasting). Then, the corrosion and/or oxidation layers and products are removed. If appropriate, cracks in the turbine blade or vane 120, 130 or the heat shield element 155 are also repaired. This is followed by recoating of the turbine blades or vanes 120, 130, heat shield elements 155, after which the turbine blades or vanes 120, 130 or the heat shield elements 155 can be reused.

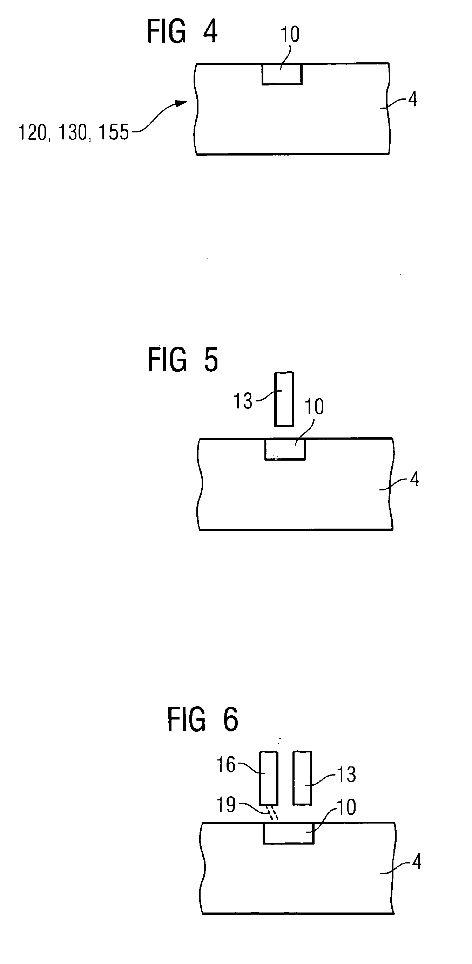

Figure 4 shows a component 1, 120, 130, 155, which comprises a substrate 4.

The substrate 4 is especially made of a superalloy, especially of w nickel based superalloy.

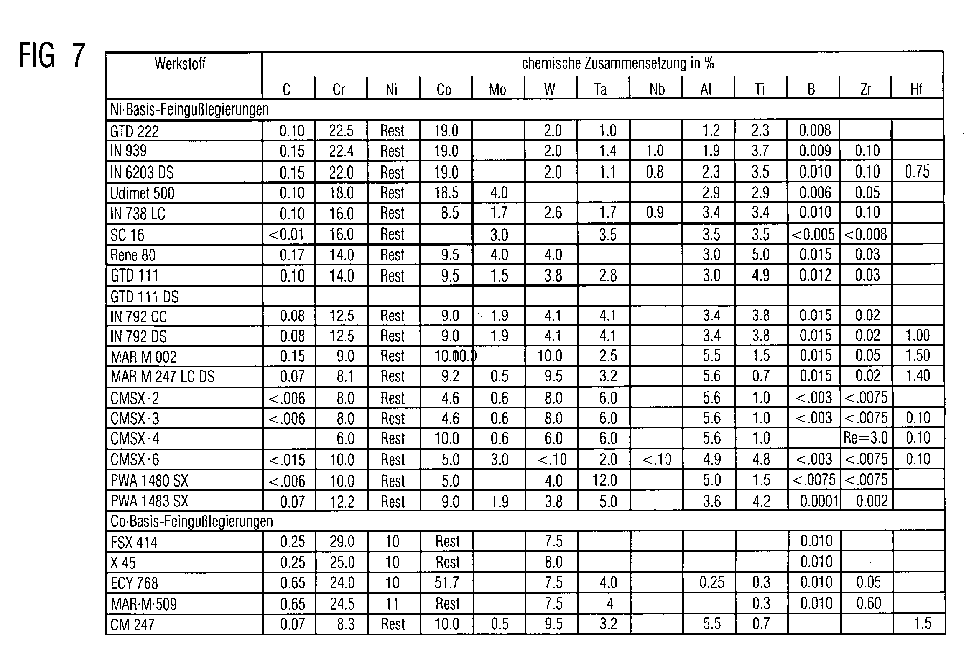

Superalloys which can be repaired by this method are listed in figure 7, especially: PWA1483SX, CMSX4.

This substrate 4 posesses a crack 10 or hole 10 which has to be closed. The hole or crack 10 is a blind hole.

Especially the depth of the cracks 10 is between 0.75mm up to 1.5mm. Especially the depth of the cracks 10 is up to 1mm, very especially in the range of 1mm.
The width of the crack 10 at the surface 22 of the component is preferably in the range between 10µm to 100µm.

The preheating is preferably performed only locally around the area 10 to be welded and in the other region the temperature is much lower.

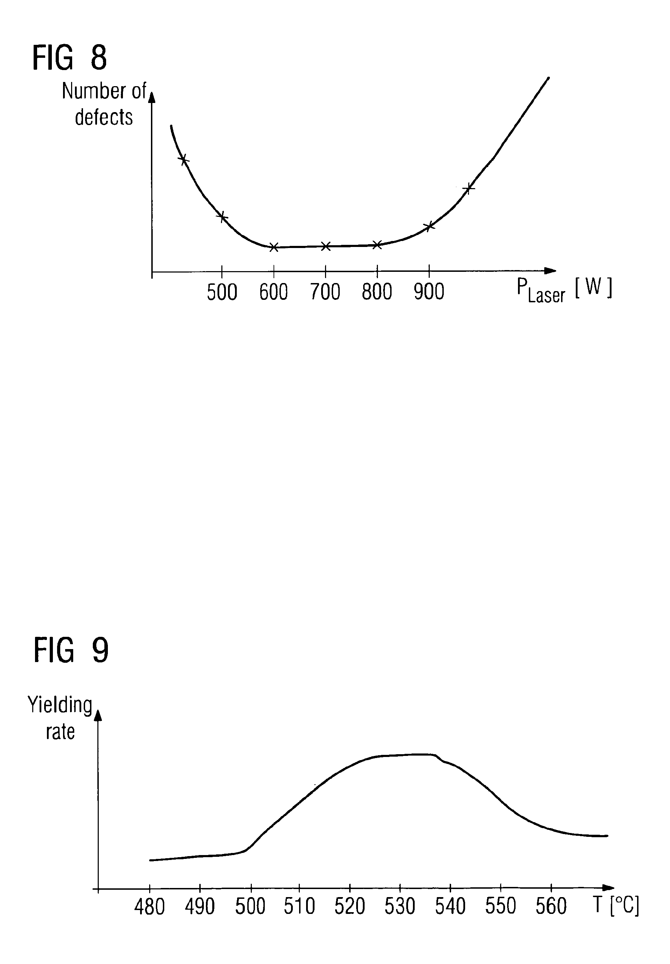

Very good results have been obtained at temperature > 500°C, especially in a temperature range between 510°C and 550°C, because temperatures ≤ 500°C lead to an increase of defects like misorientation of grains, because the thermal gradient is to high, by which yielding rates of good welds are decreased or number of defects decreases (Fig. 9). "> 500°C" means that the temperature T with a given measuring tolerance ΔT (>0) is higher than 500°C: Tₚᵣₑₕₑₐₜ > 500°C + ΔT.

The preheating temperature is preferably maintained during the whole welding process.

Although there are several possibilities of lasers 13 as welding device to be used it was found that a Nd-YAG or high power diode laser type is the best to be used.

The diameter of the spot size of the laser beam is in the range of 2.5mm to 5mm, especially from 3mm to 5mm and very especially in the range of 4mm.
Surprisingly it was found that such a big diameter of the laser beam focus shows good results of repairing that small cracks (10µm to 100µm), wherein "small" relates to the crack width at the surface 22 of the substrate 4.
The power of the laser 13 P_{Laser}[W] is preferably between 450Watt to 950Watt, especially 500Watt to 900Watt (Fig. 8), so that laser intensities of 2,3kW/cm² to 30kW/cm², especially 2,5kW/cm² to 29kW/cm² are reached.
Preferably the relative movement of the laser beam and the substrate 4 to be repaired is < 1mm/s, especially ≤0.9mm/s and very especially of 50mm/min. Preferably the relative movement is ≥ 0.4mm/s, especially ≥ 0.6mm/s

Nevertheless, additional material 19 (Fig. 6), especially: PWA 1483, CMSX4 based powders can be added by a material feeder 16 (Fig. 6, especially in form of powders) whose supplied material is melted also by the welding apparatus 13.

## Claims

1. A welding method of welding a component (1, 120, 130, 155),
wherein a preheating temperature of the component (1, 120, 130, 155) higher than 500°C (>500°C) and lower than 600°C is used.

2. A method according to any of the preceding claims,
wherein the preheating temperature is higher than 510°C.

3. A method according to any of the preceding claims,
wherein the preheating temperature is higher than 520°C.

4. A method according to any of the preceding claims,
wherein the preheating temperature is below 550°C.

5. A method according to claim 1,
wherein the component (1, 120, 130, 155) is made of a nickel based super alloy.

6. A method according to claim 5,
wherein the component (1, 120, 130, 155) is made of a directionally solidified columnar grained (DS).

7. A method according to claim 5,
wherein the component (1, 120, 130, 155) is made of a single crystal superalloy (SX).

8. A method according to claim 1,
wherein a laser (13) is used for welding.

9. A method according to claim 1,
wherein a plasma is used for welding.

10. A method according to claim 1, 2, 3, 4, 5, 6 or 7,
wherein the component (1, 120, 130, 155) is preheated by an induction system.

11. A method according to claim 1, 2, 3, 4, 5 or 6,
wherein the component (1, 120, 130, 155) is preheated by an infrared lamp.

12. A method according to claim 1, 2, 3, 4, 5 or 6,
wherein the component (1, 120, 130, 155) is preheated by a laser,
which is especially also used for welding.

13. A method according to one of the claims 1, 5, 10, 11 or 12,
wherein the component (1, 120, 130, 155) is preheated only locally in the area (10) to be welded.

14. A method according to any of the preceding claims,
wherein a material (19) is added to the to be welded area (10).

15. A method according to any of the preceding claims,
wherein no material is added to the to be welded area (10).

16. A method according to any of the preceding claims,
wherein the preheating temperature is maintained during welding.

17. A method according to any of the preceding claims,
wherein the spot size of the laser beam has a diameter
from 2.5mm to 5mm,
especially from 3mm to 5mm and
very especially 4mm.

18. A method according to any of the preceding claims,
wherein the power of the laser (13) is between 450W to 950W,
especially between 500W to 900W.

19. A method according to any of the preceding claims,
wherein the relative movement of the laser beam and the component is < 1mm/s.

20. A method according to any of the preceding claims 1 to 19,
wherein the relative movement is 1mm/s.

21. A method according to claim 19,
wherein the relative movement is ≥ 0,4mm/s and ≤ 0,9mm/s, especially 50 mm/min.

22. A method according to any of the preceding claims,
wherein a Nd-YAG laser is used.

23. A method according to any of the preceding claims,
wherein the welding method is a remelting process.
